# FASCICULE DE BREVET EUROPEEN

(11) **EP 1 924 538 B1**
(45) Date de publication et mention de la délivrance du brevet: **18.07.2018**
(21) Numéro de dépôt: 06808088.6
(22) Date de dépôt: 07.09.2006
(51) Int. Cl.: C05F 11/02

(54) **PROCEDE DE PREPARATION D'UNE COMPOSITION HUMIQUE ARTIFICIELLE**
VERFAHREN ZUR HERSTELLUNG EINER SYNTHETISCHEN HUMUSZUSAMMENSETZUNG
METHOD FOR PREPARING A SYNTHETIC HUMIC COMPOSITION

(30) Priorité: 13.09.2005 FR 0509300
(43) Date de publication de la demande: 28.05.2008
(73) Titulaire: BOIS VALOR, 81160 Saint-Juéry (FR)
(72) Inventeur: MORARD, Philippe, 31100 Toulouse (FR); GOURDON, Christophe, 31500 Toulouse (FR); RIGAL, Luc, 31240 Saint Jean (FR); PRAT, Laurent, 31200 Toulouse (FR); SILVESTRE, Jérôme, 31520 Ramonville Saint Agne (FR)
(74) Mandataire: Cabinet BARRE LAFORGUE & associés
(86) Numéro de dépôt international: PCT/FR2006/002062
(87) Numéro de publication internationale: WO 2007/031625

(56) Documents cités:
- DE-C- 803 836
- US-A- 4 788 360
- US-A- 5 023 097
- US-A1- 2004 261 481
- DATABASE WPI Section Ch, Week 199619 Derwent Publications Ltd., London, GB; Class C04, AN 1996-186530 XP002396015 & RU 2 042 422 C1 (SHULGIN A I) 27 août 1995 (1995-08-27)

## Description

L'invention concerne un procédé de préparation d'une composition humique artificielle, et l'utilisation de celle-ci comme fertilisant en grande culture et/ou en jardinerie d'amateur.

Dans tout le texte, on entend par :
- composition humique artificielle : une composition, solide ou liquide, qui est préparée par la mise en oeuvre d'un procédé non essentiellement biologique et qui renferme des composés d'origine organique aux propriétés, notamment biologiques, proches de celles des substances humiques naturelles -notamment en terme de capacité à stimuler la croissance et/ou le développement des végétaux terrestres, et/ou en terme de capacité à améliorer les propriétés physico-chimiques des sols de culture- ; ces composés d'origine organique sont dits substances (ou composés) humiques artificielles,
- matière ligno-cellulosique : une matière d'origine végétale riche en parois de cellules ayant subi le processus de lignification (processus de « vieillissement » ou de rigidification de la paroi),
- matière ligno-cellulosique fraîche : une matière ligno-cellulosique n'ayant sensiblement pas subi de transformation de décomposition enzymatique, par exemple selon un processus de fermentation et/ou de compostage ; il peut s'agir par exemple du bois, des tiges ou des rafles du maïs, de la paille de céréale ; on dit d'une matière ligno-cellulosique fraîche qu'elle est sèche (ou séchée) lorsqu'elle présente un taux d'humidité notablement inférieur à son taux d'humidité physiologique,
- matière ligno-cellulosique fossile (ou fossilisée) : une matière ligno-cellulosique formée à la suite d'un processus lent de transformation naturelle de la matière organique ; il s'agit en particulier de la houille, du lignite, de la tourbe, des pyroschistes, du sapropèle et de la léonardite.

Les substances humiques (ou humus) sont un groupe de macromolécules organiques qui appartiennent à la fraction colloïdale du sol. Elles proviennent de la décomposition partielle, menée par la microflore du sol, de matières organiques végétales, animales et/ou microbiennes. Dans ce processus de dégradation extrêmement lent, qui conduit en final à la dégradation totale de ces matières organiques avec production de dioxyde de carbone et libération des éléments minéraux, les substances humiques correspondent à des produits intermédiaires de cette dégradation.

L'intérêt que représentent les substances humiques, pour l'agriculture et pour la jardinerie d'amateur, vient de leurs réactivités chimique et biologique importantes ; elles interviennent dans la capacité d'échange cationique des sols et favorisent l'alimentation minérale des végétaux cultivés. Aussi, leur utilisation comme engrais naturel, pour favoriser la croissance et le développement des végétaux (fertilisation), est une solution alternative et écologique à l'utilisation des engrais chimiques.

L'utilisation agricole des substances humiques est ancienne et remonte à l'apparition des premières techniques de compostage visant à optimiser la transformation de détritus et déchets organiques -notamment des ordures ménagères- en un produit stable riche en composés humiques, appelé compost, par décomposition microbiologique contrôlée. Quelles que soient les évolutions récentes qu'a connues le compostage, le principe général reste le même ; les micro-organismes aérobies doivent se trouver dans les conditions idéales pour se multiplier et pour décomposer les matières organiques. Il faut, en particulier, tenir compte des paramètres tels que: l'aération, la température, l'humidité, le rapport carbone/azote...

Malgré la simplicité de mise en oeuvre, l'avantage de permettre une valorisation des détritus et déchets organiques, et même si de nombreux équipements tels que des composteurs peuvent en améliorer les performances, le compostage présente quelques inconvénients encore incontournables qui défavorisent les tentatives d'une mise en oeuvre à grande échelle -notamment industrielle- : un encombrement important (accumulation de déchets et de détritus) pour une productivité faible (quelques mois sont nécessaires pour l'obtention d'un compost de bonne qualité) et le désagrément des odeurs nauséabondes.

De nos jours, le compost est ainsi fabriqué essentiellement par l'utilisateur (le particulier) lui-même. Quant à son utilisation, elle se limite généralement à une fertilisation d'appoint, dans les jardineries d'amateur et, éventuellement, dans les exploitations agricoles de tailles modestes.

Il est également connu que des minerais comme la houille, le lignite, la tourbe, les pyroschistes, le sapropèle ou encore la léonardite, qui renferment des matières ligno-cellulosiques fossilisées, présentent une teneur importante en substances humiques. Dès lors, en vue de répondre aux besoins en fertilisants, aussi bien des grandes cultures que des jardineries d'amateur, il a été envisagé d'extraire à échelle industrielle, les substances humiques à partir de certaines de ces matières fossiles.

Pour ce faire, de nombreuses méthodes sont connues. Les plus utilisées reposent sur le principe d'une extraction alcaline réalisée en milieu humide, voire liquide. Afin d'accroître les rendements d'extraction, des dispositifs de type broyeur et/ou malaxeur peuvent être utilisés notamment pour améliorer la pénétration de l'agent alcalin au sein de ces matières fossiles.

De façon singulière, RU-2042422 propose un dispositif de traitement de charbon et/ou de tourbe, permettant d'extraire de façon rapide et efficace les substances humiques, grâce à l'action combinée entre une solution alcaline, des oscillations acoustiques de basses fréquences, et des courants de cavitation.

Indépendamment de la méthode d'extraction utilisée, les substances humiques issues des matières fossiles présentent des inconvénients imputables ces matières fossiles elles-mêmes. En effet, il s'agit là de matières premières dont les caractéristiques et les propriétés peuvent être très fluctuantes, et pas seulement d'un type de matière fossile à l'autre, mais entre des matières fossiles de même type, mais de provenances géographiques différentes (qui renseignent sur la qualité du sol, les antécédents géologiques, la nature de la matière ligno-cellulosique d'origine), d'âges différents, de profondeurs dans le sol différentes... autant de paramètres qui *in fine* ont des répercussions sur leur teneur en composés humiques, ainsi que sur les propriétés biologiques de ces composés sur le développement et/ou la croissance des plantes. De ce fait, les différentes substances humiques, extraites à partir de différents lots d'un même type de matière fossile, ne présentent généralement pas une très grande homogénéité en termes de composition chimique et d'activité biologique à l'égard des plantes.

Par ailleurs, il s'agit de matières naturelles dont la formation nécessite de très longues périodes. Les gisements s'épuisent rapidement et deviennent de plus en plus difficiles à trouver. De plus, des prélèvements intensifs de ces matières dans l'environnement induisent des perturbations importantes. Par exemple, les tourbières constituent de véritables réservoirs biologiques peuplés d'innombrables espèces végétales et animales.

En marge des techniques d'extraction des substances humiques, RU 2 176 631 vise à accroître la teneur en substances humiques de certaines matières fossiles. Pour ce faire, il est préconisé d'effectuer une oxydation par voie humide dans laquelle la matière fossile est mise en suspension dans l'acide sulfurique ou dans l'acide chlorhydrique, puis subit une oxydation par de l'acide nitrique dilué. La réaction d'oxydation est réalisée sous agitation à des températures de l'ordre de 70 à 90°C, pendant 10 à 90 minutes. Les substances humiques de la préparation sont alors récupérées par extraction alcaline.

Le document DE803836C décrit un procédé de fabrication de substances humiques à partir de substances végétales récentes ou fossiles dans lequel on fait subir à la composition de départ à l'état solide divisé, un traitement thermique.

L'invention a pour objectif de proposer un procédé de préparation d'une composition humique artificielle dont l'utilisation comme fertilisant agricole est respectueuse de l'environnement et qui, en terme de capacité à stimuler la croissance et/ou le développement des végétaux terrestres, est proche des substances humiques naturelles.

L'invention vise, en particulier, à proposer un tel procédé de préparation qui puisse être mis en oeuvre à partir de produits (ou compositions) de départ facilement accessibles et en abondance, et ce, afin de pouvoir autoriser une production et une commercialisation de la composition humique artificielle en quantité suffisamment importante pour pouvoir répondre aux attentes des exploitations agricoles.

En outre, l'invention vise à proposer un procédé et une installation permettant d'obtenir une productivité élevée et qui, au regard des contraintes d'une exploitation industrielle, soient compatibles avec les exigences actuelles en matière de respect de l'environnement et de coûts de mise en oeuvre.

A cet effet, l'invention concerne un procédé de préparation d'une composition humique artificielle selon la revendication.

Dans un procédé selon l'invention, on soumet la composition de départ à un traitement mécanique à sec, c'est-à-dire sans adjonction de liquide.

Un premier avantage d'un procédé de préparation de substances humiques conforme à l'invention vient d'une mise en oeuvre qui peut se faire à partir d'une composition de départ, notamment une matière ligno-cellulosique fraîche des plus ordinaires, comme le bois, les tiges et les rafles du maïs, la paille de céréales... A la différence des matières fossiles naturellement riches en composés humiques, les matières ligno-cellulosiques précédemment citées se trouvent non seulement en abondance, ce sont surtout des produits renouvelables. Egalement, grâce à l'abondance de chacune de ces matières ligno-cellulosiques fraîches, l'industriel peut disposer d'une très grande quantité d'une même composition de départ. De ce fait, de grandes quantités de substances humiques artificielles peuvent être fabriquées à partir d'une même composition de départ ; ce qui est une garantie de l'homogénéité et de la constance, en terme de qualité, entre les différents lots de produits mis dans le commerce.

Selon les inventeurs, un traitement mixte conforme à l'invention entraînerait une dégradation et/ou une déstructuration partielle(s) de la matière ligno-cellulosique fraîche. Ce traitement mixte, thermique et mécanique, permet de préparer un produit transformé, dit produit intermédiaire, solide, d'un brun plus ou moins intense, riche en substances humiques artificielles (faciles à extraire notamment par des méthodes déjà connues). Au cours de ce traitement mixte, l'apparition d'une coloration brune, qui progressivement s'amplifie, témoigne de la formation desdites substances humiques artificielles. Les inventeurs ont par la suite constaté que les substances humiques artificielles ainsi préparées, après extraction (et éventuellement après une dilution appropriée), présentent des propriétés remarquables sur la croissance et le développement des plantes et, en particulier, sur la floraison du géranium et du bégonia, ainsi que sur le développement du ray-grass. Ces substances humiques artificielles, à l'instar des substances humiques naturelles, peuvent ainsi être utilisées de façon avantageuse comme fertilisant.

Dans le reste du texte, à des fins de simplification, ces substances humiques artificielles (préparées selon l'invention) pourront être désignées par l'expression générique « substances humiques ».

Dans la mise en oeuvre d'un traitement mixte constitutif d'un procédé conforme à l'invention, on prendra soin d'ajuster les paramètres et les conditions de réalisation (en particulier, température, temps de traitement, taux d'O₂ résiduel...) de façon à éviter la combustion et la carbonisation de la composition. En particulier, on tentera de limiter autant que possible l'apport en oxygène dans l'enceinte au cours du traitement mixte pour éviter les risques d'explosion. Dans la mise en oeuvre d'un traitement mixte selon l'invention, le seul apport en oxygène résulte de l'alimentation de l'enceinte en matière de départ ; selon l'invention, on utilise une enceinte non intentionnellement alimentée en oxygène au cours du traitement mixte.

Pour mettre en oeuvre un procédé selon l'invention, on choisit une composition de départ sèche. Selon l'invention, une étape de séchage préalable de la composition de départ est envisagée.

Avantageusement et selon l'invention, la composition de départ présente un taux d'humidité au moins inférieur à 20 %, de préférence au moins inférieur à 10 %.

Selon un mode préférentiel de réalisation de l'invention, on choisit comme composition de départ du bois de peuplier sous forme divisée en particules, d'épaisseur au moins inférieure à 1,5 cm. En particulier, il s'agit avantageusement de copeaux ou de la sciure. Avantageusement et selon ce mode de réalisation, la température du traitement mixte est avantageusement comprise entre 170°C et 230°C.

Un autre avantage de l'invention, et non des moindres, vient de la rapidité d'exécution. En effet, selon les conditions de mise en oeuvre du procédé, quelques heures à quelques jours suffisent pour obtenir la formation de ces substances humiques.

Les substances humiques préparées selon l'invention présente la particularité de provenir d'une dégradation et/ou d'une déstructuration partielle(s) de ladite matière ligno-cellulosique soumise à un effet de malaxage et/ou de broyage et/ou de cisaillement de ladite matière ligno-cellulosique, et sous l'effet d'une température comprise entre 100°C et 280°C.

L'effet de malaxage et/ou de broyage et/ou de cisaillement est(sont) ici obtenu(s) grâce à un déplacement entretenu d'au moins un organe mécanique rigide au sein et au contact de ladite matière ligno-cellulosique. Ce déplacement est dit entretenu du fait qu'il perdure pendant ledit traitement mixte ; il peut être continu ou discontinu, il peut se répéter de manière régulière ou irrégulière.

Selon un mode particulier de réalisation d'un traitement mixte constitutif d'un procédé selon l'invention, avantageusement, on utilise un extrudeur bi-vis. Le profil de vis, défini par l'enchaînement, la forme et le pas des éléments de vis constitutifs de la bi-vis, et la rotation de la bi-vis sont choisis pour un effet de malaxage et de broyage (cisaillement), et un temps de séjour de ladite matière ligno-cellulosique dans ledit extrudeur bi-vis, adaptés pour entraîner la formation d'un produit intermédiaire renfermant des substances humiques.

Pour la mise en oeuvre d'un traitement mixte constitutif d'un procédé conforme à l'invention, un tel équipement présente le grand intérêt de permettre une automatisation de l'ensemble des étapes et la réalisation de ce traitement en une opération unitaire.

L'emploi d'un extrudeur bi-vis permet avantageusement un contrôle précis d'un grand nombre de paramètres de fonctionnement d'un procédé selon l'invention (température de traitement, mode et force de cisaillement, temps de traitement...). En effet, en modifiant certaines des caractéristiques structurelles et/ou certaines caractéristiques de fonctionnement de l'extrudeur bi-vis, l'opérateur intervient sur les paramètres mêmes du procédé.

A titre d'exemple de caractéristiques structurelles d'un extrudeur bi-vis au niveau desquelles un opérateur peut intervenir, et qui sont généralement déterminées et fixées avant sa mise en marche (et qui ne sont pas normalement modifiables pendant son fonctionnement), on cite en particulier le profil des vis, qui dépend essentiellement de la forme du filet des vis (qui peut être par exemple trapézoïdal, conjugué, simple ou double...) et du pas de vis. Chacune de ces vis peut également présenter différents tronçons (ou segments) qui peuvent éventuellement différer les uns des autres, par la forme du filet et/ou par le pas de vis. Eventuellement, certains des tronçons constitutifs de ces vis peuvent également correspondre à des éléments malaxeurs monolobes ou bilobes.

Parmi les caractéristiques de fonctionnement d'un extrudeur bi-vis au niveau desquelles un opérateur peut intervenir à tout moment (aussi bien lorsque cet équipement est à l'arrêt que lorsqu'il est en marche), on peut citer :
- la vitesse de rotation des vis,
- la température de l'enceinte (ou fourreau) ; des températures particulières peuvent être fixées en différentes parties de cette enceinte.

Le grand choix dans les caractéristiques structurelles et de fonctionnement d'un tel équipement autorise une grande liberté dans les ajustements des conditions de mise en oeuvre d'un procédé selon l'invention, et en particulier permet de définir les conditions optimales (par exemple, la température, la force de cisaillement, la durée du traitement...) spécifiques à chacune des compositions de départ choisie. Avantageusement, la bi-vis d'un extrudeur bi-vis utilisée dans le cadre de l'invention, peut comprendre au moins deux tronçons qui diffèrent par leur profil vis.

Il convient de noter que des équipements, autres qu'un extrudeur bi-vis, peuvent également convenir pour la mise en oeuvre d'un traitement mixte constitutif d'un procédé conforme à l'invention. Par exemple, des torréfacteurs dont l'enceinte est équipée d'organe(s) mécanique(s) de brassage peuvent éventuellement être utilisés à cet effet.

Une fois le produit intermédiaire obtenu, celui-ci est alors soumis à une extraction de ses substances humiques artificielles.

Avantageusement et selon l'invention, à partir du produit intermédiaire, on extrait les substances humiques par entraînement dans une solution alcaline que l'on mélange à ladite composition.

Avantageusement et selon l'invention, on extrait lesdites substances humiques avec une solution d'hydroxyde de potassium (KOH) -notamment de normalité 1N-, cette opération étant réalisée à une température comprise entre 40°C et 150°C -préférentiellement à une température de l'ordre de 120°C-.

Avantageusement et selon l'invention, après avoir mélangé et fait macérer, sous agitation, le produit intermédiaire avec une solution alcaline -notamment de KOH-, on réalise une séparation solide-liquide des phases solide et liquide de ce mélange. La séparation liquide-solide peut notamment être réalisée par décantation, par filtration ou par centrifugation.

Selon un mode particulier de réalisation des étapes d'extraction des substances humiques et de séparation solide-liquide d'un procédé selon l'invention, avantageusement, on utilise un extrudeur bi-vis. Cet extrudeur bi-vis comprend une enceinte apte à recevoir un produit intermédiaire obtenu à l'issue d'un traitement mixte selon l'invention, et apte à pouvoir être maintenue à une température adaptée pour permettre l'entraînement de substances humiques par la solution alcaline. Ledit extrudeur bi-vis comprend également un filtre solide-liquide installé à une extrémité aval de son enceinte.

Avantageusement et selon l'invention, la vitesse de rotation de la bi-vis et le profil de vis (enchaînement, forme, pas des éléments de vis constitutifs de la bi-vis) sont choisis pour un effet de malaxage et un temps de macération dudit produit intermédiaire avec la solution alcaline, adaptés pour permettre l'extraction des substances humiques de ce produit intermédiaire.

Selon un mode particulier de réalisation de l'invention, on peut envisager l'utilisation d'un seul et même extrudeur bi-vis pour réaliser à la fois le traitement mixte et les étapes combinées d'extraction et de séparation solide-liquide. Pour ce faire, cet extrudeur bi-vis présente avantageusement :
- une zone amont dans laquelle la composition de départ subit essentiellement un traitement mixte conforme à l'invention, et
- une zone aval dans laquelle le produit intermédiaire, issu dudit traitement mixte, et sortant de ladite zone amont, est mis en contact avec une solution alcaline ; ladite zone aval comprend également un orifice d'évacuation de liquide pourvu d'un filtre solide-liquide permettant d'effectuer la séparation solide-liquide par filtration.

Au terme d'une étape d'extraction et de séparation solide-liquide conforme à l'invention, on récupère une phase liquide qui contient des substances humiques. Cette phase liquide présente un pH généralement de l'ordre de 13-14. Avantageusement et selon l'invention, on abaisse le pH de cette phase liquide, notamment en y ajoutant une solution d'acide, par exemple, l'acide nitrique.

Avantageusement et selon l'invention, on ajoute à ladite phase liquide une solution d'acide nitrique de concentration et en quantité adaptées pour obtenir une solution liquide de pH compatible avec une utilisation comme fertilisant des sols de culture.

Eventuellement, on procède à une décantation de cette phase liquide -notamment, après neutralisation de son pH basique- pour la clarifier (par exemple, pour éliminer les fines particules entraînées lors de l'étape de filtration).

L'invention s'étend également à une composition humique artificielle ainsi préparée selon un procédé conforme à l'invention.

De part ses propriétés agronomiques très proches de celles des substances humiques naturelles, une composition liquide selon l'invention présente un grand intérêt comme fertilisant en grande culture et/ou en jardinerie d'amateur.

L'invention s'étend ainsi également à l'utilisation d'une telle composition, notamment sous forme liquide, comme fertilisant pour améliorer la structure des sols (amendement) et pour favoriser la croissance et le développement des végétaux (fertilisation). Par exemple, on peut envisager d'apporter ladite composition, directement ou après une dilution appropriée, à l'eau d'irrigation et/ou d'arrosage. On peut aussi envisager d'incorporer cette composition à des solutions d'engrais minéraux.

L'invention concerne également un procédé de préparation d'une composition humique artificielle, une composition humique artificielle sous forme liquide, ainsi que l'utilisation de cette composition humique artificielle à titre d'engrais liquide, à des fins d'amendements des sols de culture et/ou de fertilisation de plantes terrestres, caractérisés, en combinaison, par tout ou partie des caractéristiques ci-dessus ou ci-après.

D'autres buts, caractéristiques et avantages de l'invention apparaîtront à la lecture de la description détaillée d'un mode de réalisation bien particulier utilisant des extrudeurs bi-vis. Cette description détaillée se réfère aux figures annexées, dans lesquelles :

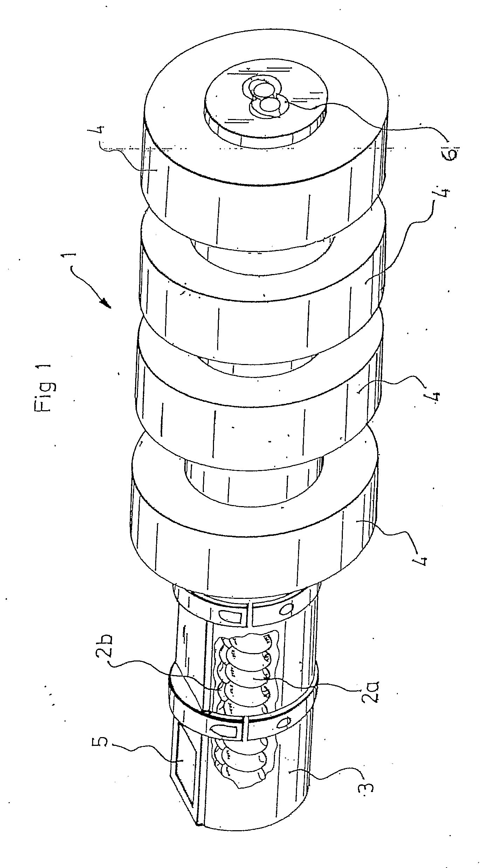

- la figure 1 est une vue schématique en perspective éclatée d'un extrudeur bi-vis donné à titre d'exemple d'équipement industriel pouvant être utilisé pour la mise en oeuvre d'un procédé de préparation d'une composition humique artificielle conforme à l'invention, et en particulier pour la mise en oeuvre d'un traitement mixte conforme à l'invention,

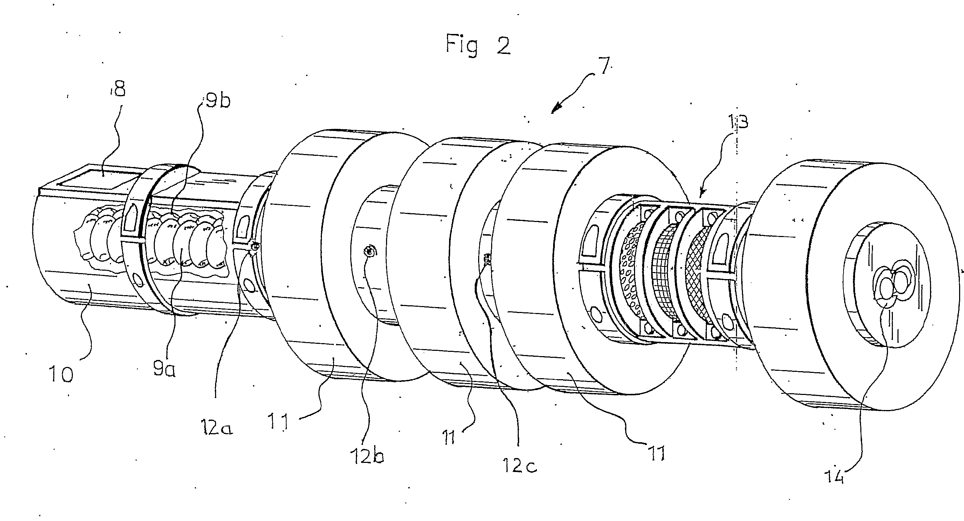

- la figure 2 est une vue schématique en perspective éclatée d'un extrudeur bi-vis donné à titre d'exemple d'équipement industriel pouvant être utilisé pour la mise en oeuvre d'un procédé de préparation d'une composition humique artificielle conforme à l'invention, et en particulier pour la mise en oeuvre des étapes d'extraction des substances humiques et de séparation liquide/solide conformes à l'invention.

De manière générale et tel que schématiquement illustré par la figure 1, un extrudeur bi-vis 1 est constitué de deux vis 2a et 2b parallèles et copénétrantes (à filets partiellement imbriqués) tournant à l'intérieur d'un fourreau modulaire définissant une enceinte 3. La température à l'intérieur de l'enceinte 3 est contrôlée en différentes zones par des colliers 4, qui peuvent être de refroidissement et/ou de chauffage. La composition de matière à traiter est introduite à l'intérieur de l'extrudeur bi-vis 1 à travers un orifice d'alimentation 5. A l'intérieur du fourreau 3 de l'extrudeur bi-vis 1, au cours de son transport à travers l'appareil, la composition de matière est soumise à des effets de pressions et de détentes, associées à des effets de cisaillement plus ou moins importants, en fonction de l'enchaînement, de la forme et du pas des éléments de vis choisis pour réaliser le traitement mécanique, et est simultanément portée à une température comprise entre 100°C et 280°C. Le produit issu de ce traitement mixte, désigné par produit intermédiaire, est recueilli à l'extrémité 6 de l'extrudeur bi-vis 1 sous forme d'un produit solide, riche en substances humiques artificielles.

Une fois le produit intermédiaire riche en substances humiques artificielles préparé, celui-ci est soumis à une étape d'extraction des substances humiques par exemple au moyen d'un extrudeur bi-vis 2 tel qu'illustré à la figure 2.

De manière générale et tel que le montre la figure 2, on utilise un extrudeur bi-vis 7 du même type que celui représenté à la figure 1. L'extrudeur bi-vis 7 s'en différencie toutefois en ce qu'il est équipé d'un module de filtration 13 permettant de réaliser une séparation liquide/solide. Un produit intermédiaire conforme à l'invention, préalablement préparé, est introduit à l'intérieur de l'extrudeur bi-vis 7, à travers l'orifice d'alimentation 8, et est entraîné en direction de l'extrémité distale de l'appareil par les deux vis 9a et 9b parallèles et copénétrantes tournant à l'intérieur du fourreau définissant l'enceinte 10. La température à l'intérieur de l'enceinte 10 est contrôlée en différentes zones par des colliers 11. La solution alcaline est introduite à l'intérieur de l'enceinte 10, en différents points 12a, 12b, 12c, par des moyens de pompage (non représentés). Le profil de vis est défini pour obtenir une mise en contact intime du liquide et du solide (le produit intermédiaire) par malaxage à une température, comprise entre 40°C et 150°C, apte à permettre l'extraction des substances humiques.

A l'intérieur de l'extrudeur bi-vis 7, le mélange pâteux liquide-solide est malaxé et pressé contre les filtres du module de filtration 13 ; le liquide contenant les substances humiques artificielles est filtré à travers les filtres du module de filtration 27. La filtration se réalise en continu. Son principe repose sur la formation d'un bouchon dynamique, par accumulation de matière dans un contre-filet situé en aval du module de filtration 13 qui assure le pressage de la matière. Ce bouchon de composition essentiellement solide est dit dynamique parce qu'il « s'écoule » malgré tout à travers le contre-filet (ajouré) sous la poussée de la matière gorgée de liquide qui est convoyée par les vis à pas direct. Sous l'effet du pressage, le liquide contenant les substances humiques artificielles s'écoule en passant à travers les filtres. La surface des filtres est en permanence raclée par les vis, et la matière solide ne s'y accumule pas.

La matière solide épuisée est entraînée en continu vers l'extrémité 14 de l'extrudeur bi-vis 7 où elle est évacuée.

Une fois les phases liquides, contenant des substances humiques, recueillies, celles-ci sont neutralisées à l'acide nitrique 1N avant d'être testées pour leurs propriétés sur les plantes.

Pour ce faire, ces compositions liquides, sous forme diluée (1/100 à 1/200), sont apportées directement dans l'eau d'irrigation et/ou d'arrosage, ou incorporées dans des solutions d'engrais minéraux. Utilisées de cette façon, les substances humiques artificielles préparées selon l'invention favorisent la croissance et le développement des plantes cultivées. Les principaux résultats expérimentaux obtenus sont les suivants :
- les compositions liquides ainsi préparées favorisent la mise en fleur du géranium (pour une concentration humique de 35 mg/L) et du bégonia (pour une concentration humique de 100 mg/L),
- l'utilisation de ces compositions permet de réaliser une économie en eau d'arrosage de 6 % pour le ray-grass et de 10 % pour le géranium,
- l'ajout de ces compositions dans les solutions nutritives favorise la biodisponibilité des éléments minéraux pour les racines des végétaux (cuivre, zinc...).

Parmi les différentes compositions de matière ligno-cellulosique testées comme compositions de départ pour la préparation de substances humiques artificielles conformes à l'invention, on peut citer tout particulièrement le bois de peuplier avec lequel des résultats très satisfaisants ont été obtenus, en terme de stimulation de la croissance et du développement des plantes précédemment évoquées.

L'exemple 1 ci-après expose de façon détaillée les caractéristiques structurelles (tableau 1) d'un extrudeur bi-vis affecté à la mise en oeuvre d'un traitement mixte constitutif d'un procédé selon l'invention, ainsi que les caractéristiques de fonctionnement de celui-ci (tableau 2). De même, l'exemple 2 expose de façon détaillée les caractéristiques structurelles (tableau 3) d'un extrudeur bi-vis affecté à la mise en oeuvre des étapes d'extraction des substances humiques et de séparation liquide/solide conformes à l'invention, ainsi que les caractéristiques de fonctionnement de celui-ci (tableau 2).

EXEMPLE 1 : Mise en oeuvre d'un traitement mixte au moyen d'un extrudeur bi-vis et caractérisation analytique de la composition liquide obtenue.

La composition de départ est du bois de peuplier sous forme de copeaux frais dont le taux d'humidité est de 50 % et la densité apparente est de 0,5. Les copeaux sont séchés à 100°C en étuve ventilée jusqu'à un taux d'humidité de 7 %.

Les copeaux ainsi séchés sont introduits avec un débit de 4,5 kg/h dans un extrudeur bi-vis type CLEXTRAL BC 45 (CLEXTRAL, France), équipé d'un fourreau de sept modules de 20 cm de longueur et du profil de vis suivant :

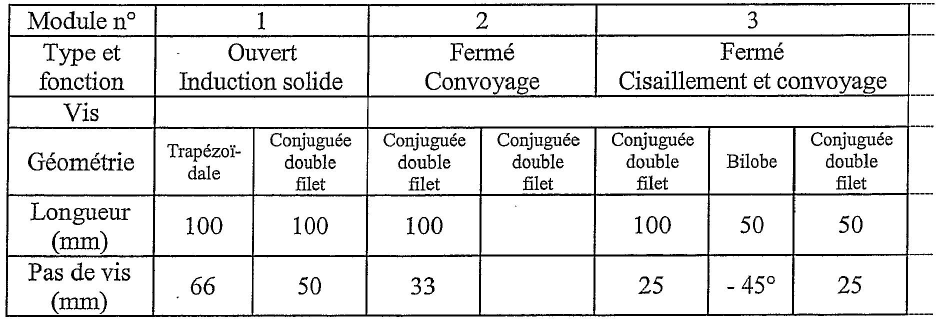

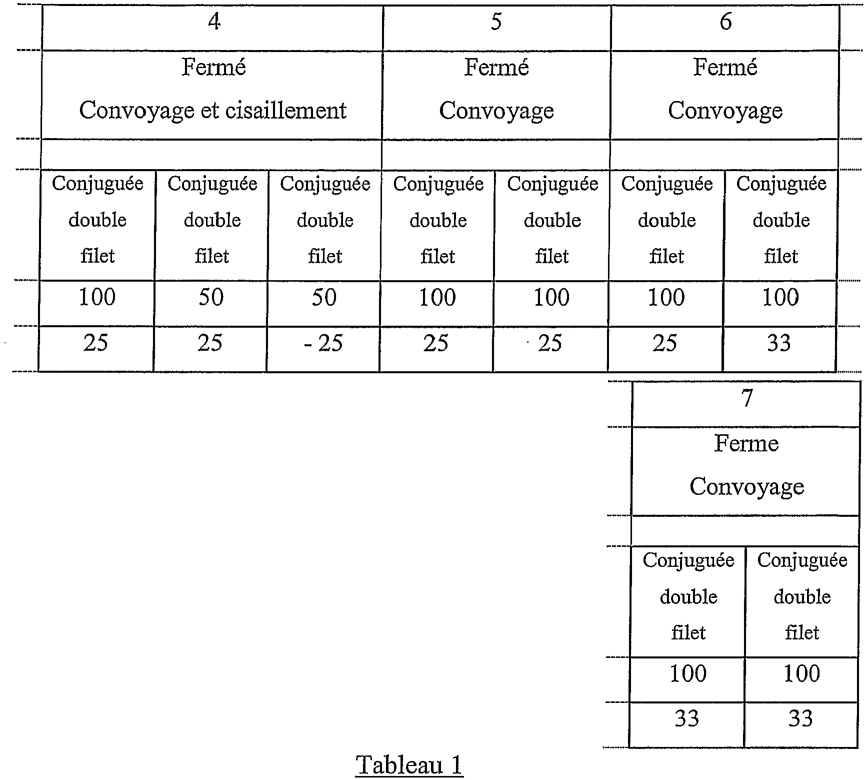

Les compositions humiques artificielles recueillies en sortie de l'extrudeur bi-vis pour les différentes conditions opératoires de température de consigne et de vitesse de rotation des vis présentent les caractéristiques suivantes :

**Tableau 2**

| Temp. (°C) | Vitesse de rotation des vis (rpm) | Teneur en carbone extractible (g/kg) | Répartition | | Rapport E4/E6 (%) |
|---|---|---|---|---|---|
| | | | Acide humique (%) | Acide fulvique (%) | |
| 170 | 125 | 12,51 | 69,40 | 30,60 | 8,39 |
| 170 | 175 | 12,71 | 68,57 | 31,43 | 8,15 |
| 200 | 100 | 12,16 | 66,59 | 33,41 | 8,35 |
| 200 | 150 | 12,34 | 67,93 | 32,07 | 8,23 |
| 200 | 200 | 12,36 | 67,64 | 32,36 | 8,26 |
| 230 | 125 | 13,30 | 66,88 | 33,12 | 8,66 |
| 230 | 175 | 11,47 | 66,05 | 33,95 | 9,01 |
| 250 | 150 | 13,46 | 74,75 | 25,25 | 6,68 |

Ces résultats illustrent l'effet de la température et de la vitesse de rotation des vis de l'extrudeur bi-vis sur la qualité des compositions humiques artificielles.

EXEMPLE 2 : Mise en oeuvre des étapes d'extraction des substances humiques et de séparation liquide/solide au moyen d'un extrudeur bi-vis et caractérisation analytique de la composition liquide obtenue.

La composition de départ est du bois de peuplier sous forme de copeaux de 1 cm de longueur et 0,3 cm d'épaisseur en moyenne, à un taux d'humidité de 7 %.

Le traitement mixte (c'est-à-dire un traitement à la fois thermique et mécanique) est réalisé dans un extrudeur bi-vis type CLEXTRAL BC 45 équipé du même profil de vis que celui décrit dans l'exemple 1, dans les conditions opératoires suivantes : débit de solide entrée : 4,5kg/h ; température : 230°C ; vitesse de rotation des vis : 125 rpm, à partir de 100 kg de bois sec, il est obtenu environ 94 kg d'un produit intermédiaire solide renfermant des substances humiques artificielles.

Ce solide est introduit avec un débit de 7,3 kg/h dans un extrudeur bi-vis type CLEXTRAL BC 45, équipé d'un fourreau de 7 modules de 20 cm de longueur et du profil de vis suivant :

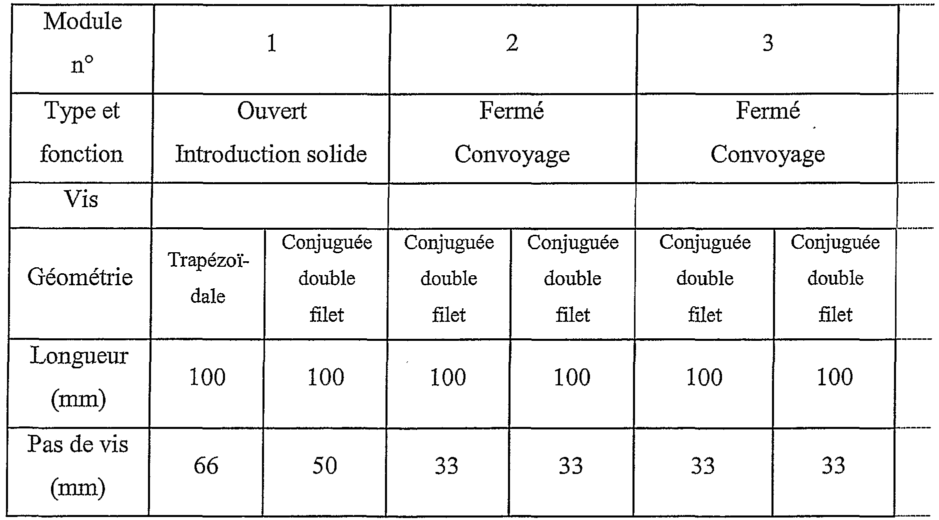

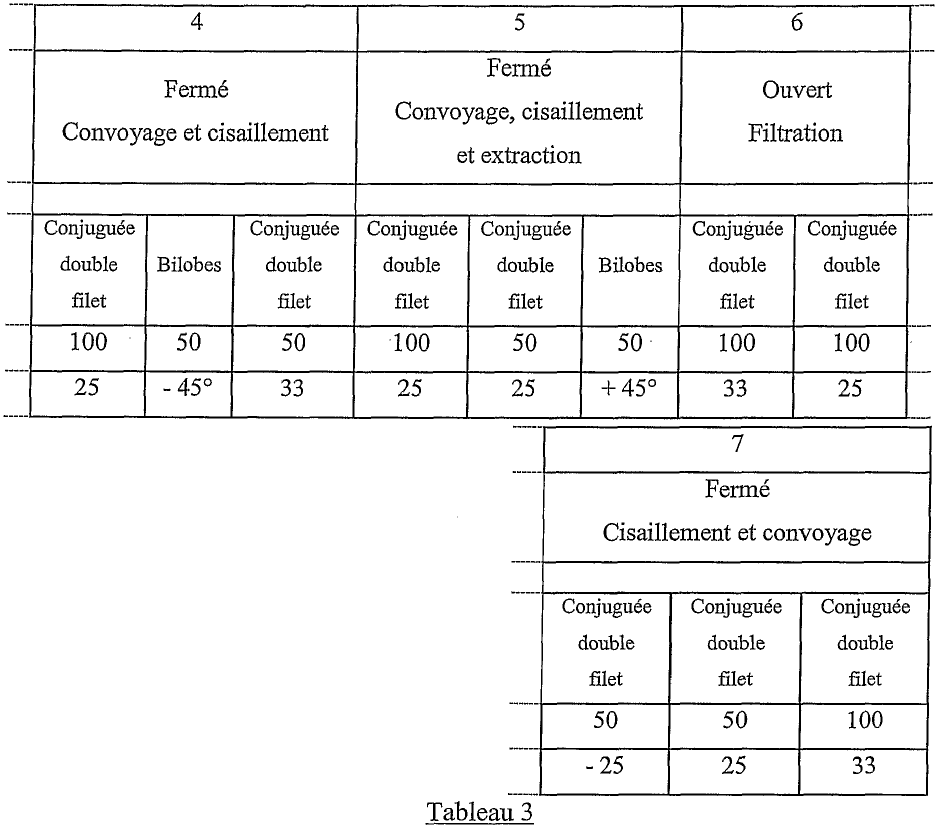

La solution aqueuse de potasse 1N est introduite du début du module 5, avec un débit défini par le ratio liquide/solide choisi. Les extraits contenant les substances humiques artificielles sont recueillis en sortie du module de filtration et présentent les caractéristiques suivantes en fonction des conditions opératoires de température de consigne, de vitesse de rotation des vis et de rapport liquide/solide :

**Tableau 4**

| Temp. (°C) | Vit. de rotation des vis (rpm) | Rapport liquide/solide (%) | Teneur en carbone (g/l) | Répartition | | Rapport E4/E6 (%) |
|---|---|---|---|---|---|---|
| | | | | Acide humique (%) | Acide fulvique (%) | |
| 50 | 125 | 11,25 | 7,77 | 66,55 | 33,45 | 7,99 |
| 50 | 125 | 13,75 | 6,05 | 65,57 | 34,43 | 6,79 |
| 50 | 112 | 15 | 5,56 | 61,49 | 38,51 | 7,60 |
| 50 | 137 | 15 | 5,72 | 59,45 | 40,55 | 7,51 |
| 85 | 125 | 12,5 | 6,53 | 63,65 | 36,35 | 8,10 |
| 85 | 125 | 10 | 8,58 | 63,31 | 36,69 | 8,47 |
| 85 | 125 | 15 | 5,56 | 62,86 | 37,14 | 7,86 |
| 85 | 100 | 15 | 5,95 | 60,34 | 39,66 | 7,78 |
| 85 | 125 | 15 | 6,79 | 62,37 | 37,63 | 7,58 |
| 85 | 150 | 15 | 5,79 | 60,88 | 39,12 | 7,40 |
| 85 | 125 | 12,5 | 7,28 | 64,06 | 35,94 | 7,30 |
| 85 | 125 | 15 | 5,85 | 61 ,89 | 38,11 | 7,61 |
| 120 | 125 | 13,75 | 6,24 | 61,97 | 38,03 | 7,41 |
| 120 | 125 | 11,25 | 8,63 | 63,43 | 36,57 | 7,70 |
| 120 | 137 | 15 | 5,56 | 61,97 | 38,03 | 6,95 |
| 120 | 112 | 15 | 6,18 | 60,96 | 39,04 | 7,26 |

Ces résultats illustrent l'effet de la température de la vitesse de rotation des vis et du rapport liquide/solide sur la qualité des solutions de substances humiques artificielles obtenues par extraction en extrudeur bi-vis d'un produit intermédiaire préalablement préparé par un traitement mixte conforme à l'invention.

## Revendications

1. Procédé de préparation d'une composition humique artificielle dans lequel :
• on choisit une composition de départ comprenant principalement au moins une matière ligno-cellulosique fraîche,
• on fait subir à la composition de départ à l'état solide divisé et préalablement séchée, un traitement, dit traitement mixte, thermique et mécanique de formation d'un produit intermédiaire renfermant des substances humiques artificielles, dans lequel :
- on introduit la composition de départ dans une enceinte (3) portée à une température comprise entre 100°C et 280°C,
- on soumet la composition de départ à un traitement mécanique à sec dans cette enceinte (3) comprenant au moins un déplacement entretenu d'au moins un organe mécanique rigide (2a, 2b) au sein et au contact de la composition de départ,
• à partir du produit intermédiaire issu dudit traitement mixte, on extrait lesdites substances humiques artificielles.

2. Procédé selon la revendication 1, **caractérisé en ce qu'**on choisit ladite matière ligno-cellulosique fraîche parmi : du bois, des tiges et des rafles du maïs, de la paille de céréale.

3. Procédé selon l'une des revendications 1 ou 2, **caractérisé en ce qu'**on choisit une composition de départ comprenant une matière ligno-cellulosique fraîche ayant un taux d'humidité inférieur à 20 %.

4. Procédé selon l'une des revendications 1 à 3, **caractérisé en ce que** ladite composition de départ comprend du bois de peuplier sous forme divisée en particules, d'épaisseur au moins inférieure à 1,5 cm.

5. Procédé selon la revendication 4, **caractérisé en ce que** les particules de bois de peuplier sont choisies parmi : des copeaux, de la sciure.

6. Procédé selon l'une des revendications 4 ou 5, **caractérisé en ce qu'**on réalise ledit traitement mixte à une température comprise entre 170 et 230°C.

7. Procédé selon l'une des revendications 1 à 6, **caractérisé en ce que** ledit traitement mixte est effectué avec un extrudeur bi-vis (1) ; ledit extrudeur bi-vis (1) comprend une enceinte (3) chauffée qui permet de porter ladite matière ligno-cellulosique à ladite température de traitement ; la vitesse de rotation de la bi-vis (2a, 2b) et son profil de vis sont choisis pour un effet de malaxage et de broyage, et un temps de séjour de ladite matière ligno-cellulosique dans ledit extrudeur bi-vis (1), adaptés pour entraîner la formation dudit produit intermédiaire renfermant des substances humiques artificielles.

8. Procédé selon l'une des revendications 1 à 7, **caractérisé en ce qu'**on extrait à partir du produit intermédiaire des substances humiques par entraînement dans une solution alcaline ; on mélange audit produit intermédiaire ladite solution alcaline et on récupère une phase liquide comprenant lesdites substances humiques artificielles.

9. Procédé selon la revendication 8, **caractérisé en ce qu'**on extrait lesdites substances humiques avec une solution d'hydroxyde de potassium (KOH), à une température comprise entre 40°C et 150°C.

10. Procédé selon la revendication 9, **caractérisé en ce qu'**on utilise une solution d'hydroxyde de potassium (KOH) de normalité 1N.

11. Procédé selon la revendication 10, **caractérisé en ce qu'**on extrait lesdites substances humiques artificielles, à une température de l'ordre de 120°C.

12. Procédé selon l'une des revendications 8 à 11, **caractérisé en ce que** pour extraire lesdites substances humiques, on fait macérer, sous agitation, le produit intermédiaire avec la solution alcaline, puis on effectue une séparation solide-liquide des phases solide et liquide.

13. Procédé selon la revendication 12, **caractérisé en ce qu'**on effectue la séparation solide-liquide par filtration.

14. Procédé selon l'une des revendications 12 ou 13, **caractérisé en ce que** les étapes d'extraction des substances humiques artificielles, et de séparation solide-liquide sont effectuées avec un extrudeur bi-vis (7) comprenant une enceinte (10) apte à recevoir le produit intermédiaire, et un filtre solide-liquide (13) installé à une extrémité aval de cette enceinte (10).

15. Procédé selon la revendication 14, **caractérisé en ce que** la vitesse de rotation de la bi-vis (9a, 9b) dudit extrudeur bi-vis (7) et son profil de vis sont choisis pour un effet de malaxage et un temps de macération du produit intermédiaire avec la solution alcaline, adaptés pour extraire des substances humiques artificielles du produit intermédiaire.

16. Procédé selon les revendications 8 à 15, **caractérisé en ce qu'**on utilise un seul et même extrudeur bi-vis pour réaliser le traitement mixte, et les étapes d'extraction et de séparation solide-liquide ; ledit seul et même extrudeur bi-vis présente :
- une zone amont dans laquelle la composition de départ subit essentiellement et de façon concomitante un traitement thermique et un traitement mécanique, dit traitement mixte, et
- une zone aval dans laquelle le produit intermédiaire issu dudit traitement mixte, et sortant de ladite zone amont est mis en contact avec une solution alcaline ; ladite zone aval comprend également un orifice d'évacuation de liquide pourvu d'un filtre solide-liquide permettant d'effectuer la séparation solide-liquide par filtration.

17. Procédé selon l'une des revendications 8 à 16, **caractérisé en ce qu'**on récupère une phase liquide comprenant les substances humiques artificielles et qu'on abaisse le pH de cette phase liquide.

18. Procédé selon la revendication 17, **caractérisé en ce qu'**on ajoute à ladite phase liquide une solution d'acide nitrique.

19. Procédé selon l'une des revendications 17 ou 18, **caractérisé en ce qu'**on ajoute à ladite phase liquide une solution d'acide nitrique de concentration et en quantité adaptées pour obtenir une solution liquide de pH compatible avec une utilisation comme engrais pour fertiliser des sols de culture.

20. Procédé selon l'une des revendications 17 à 19, **caractérisé en ce qu'**on ajoute à ladite phase liquide au moins une solution d'acide nitrique de normalité 1N.

## Patentansprüche

1. Zubereitungsverfahren einer künstlichen Humuszusammensetzung, wobei:
• eine Ausgangszusammensetzung ausgewählt wird, die hauptsächlich mindestens ein frisches Lignocellulosematerial umfasst,
• die Ausgangszusammensetzung im Schüttgutzustand und vorangehend getrocknet einer Behandlung, der thermisch und mechanisch gemischten Behandlung zur Bildung eines die künstlichen Humussubstanzen umschließenden Zwischenprodukts, unterzogen wird, wobei:
- die Ausgangszusammensetzung in eine Kammer (3) eingeführt wird, die bei einer Temperatur im Bereich zwischen 100 °C und 280 °C gehalten wird,
- die Ausgangszusammensetzung in dieser Kammer (3) einer mechanischen Trockenbehandlung unterworfen wird, umfassend mindestens eine durch mindestens ein starres mechanisches Bauteil (2a, 2b) unterhaltene Bewegung innerhalb und in Kontakt mit der Ausgangszusammensetzung,
• ausgehend von dem aus der gemischten Behandlung erhaltenen Zwischenprodukt die künstlichen Humussubstanzen extrahiert werden.

2. Verfahren nach Anspruch 1, **dadurch gekennzeichnet, dass** das frische Lignocellulosematerial ausgewählt wird aus: Holz, Stiele und Kolben von Mais, Getreidestroh.

3. Verfahren nach einem der Ansprüche 1 oder 2, **dadurch gekennzeichnet, dass** eine Ausgangszusammensetzung ausgewählt wird, umfassend ein frisches Lignocellulosematerial mit einem Feuchtigkeitsgehalt unterhalb von 20 %.

4. Verfahren nach einem der Ansprüche 1 bis 3, **dadurch gekennzeichnet, dass** die Ausgangszusammensetzung in Partikelform zerteiltes Pappelholz einer Dicke von mindestens unterhalb von 1,5 cm umfasst.

5. Verfahren nach Anspruch 4, **dadurch gekennzeichnet, dass** die Pappelholzpartikel ausgewählt sind aus: Spänen, Sägemehl.

6. Verfahren nach einem der Ansprüche 4 oder 5, **dadurch gekennzeichnet, dass** die gemischte Behandlung bei einer Temperatur im Bereich zwischen 170 und 230 °C durchgeführt wird.

7. Verfahren nach einem der Ansprüche 1 bis 6, **dadurch gekennzeichnet, dass** die gemischte Behandlung mit einem Doppelschneckenextruder (1) durchgeführt wird; wobei der Doppelschneckenextruder (1) eine beheizte Kammer (3) umfasst, die es erlaubt, das Lignocellulosematerial bei der Behandlungstemperatur zu halten; wobei die Rotationsgeschwindigkeit der Doppelschnecke (2a, 2b) und ihr Schneckenprofil für eine Knet- und Zerkleinerungswirkung und eine Verweilzeit des Lignocellulosematerials in dem Doppelschneckenextruder (1) ausgewählt sind, angepasst, um die Bildung des Zwischenprodukts, das die künstlichen Humussubstanzen umschließt, auszulösen.

8. Verfahren nach einem der Ansprüche 1 bis 7, **dadurch gekennzeichnet, dass** ausgehend von dem Zwischenprodukt Humussubstanzen durch Mitnahme in eine alkalische Lösung extrahiert werden; zu diesem Zwischenprodukt die alkalische Lösung gemischt wird und eine flüssige Phase, umfassend die künstlichen Humussubstanzen, gewonnen wird.

9. Verfahren nach Anspruch 8, **dadurch gekennzeichnet, dass** die Humussubstanzen mit einer Kaliumhydroxidlösung (KOH) bei einer Temperatur im Bereich zwischen 40 °C und 150 °C extrahiert werden.

10. Verfahren nach Anspruch 9, **dadurch gekennzeichnet, dass** eine Kaliumhydroxidlösung (KOH) einer Normalität 1N verwendet wird.

11. Verfahren nach Anspruch 10, **dadurch gekennzeichnet, dass** die künstlichen Humussubstanzen bei einer Temperatur in der Größenordnung von 120 °C extrahiert werden.

12. Verfahren nach einem der Ansprüche 8 bis 11, **dadurch gekennzeichnet, dass** zum Extrahieren der Humussubstanzen das Zwischenprodukt unter Rühren mit einer alkalischen Lösung mazeriert wird, wonach eine Fest-Flüssig-Trennung der festen und flüssigen Phasen ausgeführt wird.

13. Verfahren nach Anspruch 12, **dadurch gekennzeichnet, dass** die Fest-Flüssig-Trennung durch Filtration ausgeführt wird.

14. Verfahren nach einem der Ansprüche 12 oder 13, **dadurch gekennzeichnet, dass** die Extraktionsschritte der künstlichen Humussubstanzen und die Fest-Flüssig-Trennung mit einem Doppelschneckenextruder (7) ausgeführt werden, umfassend eine Kammer (10), die in der Lage ist, das Zwischenprodukt aufzunehmen, und einen Fest-Flüssig-Filter (13), der an einem nachgelagerten Ende dieser Kammer (10) installiert ist.

15. Verfahren nach Anspruch 14, **dadurch gekennzeichnet, dass** die Rotationsgeschwindigkeit der Doppelschnecke (9a, 9b) des Doppelschneckenextruders (7) und ihr Schneckenprofil für eine Knetwirkung und Mazerationszeit des Zwischenprodukts mit der alkalischen Lösung ausgewählt sind, angepasst, um die künstlichen Humussubstanzen des Zwischenprodukts zu extrahieren.

16. Verfahren nach den Ansprüchen 8 bis 15, **dadurch gekennzeichnet, dass** ein und derselbe Doppelschneckenextruder zum Durchführen der gemischten Behandlung und der Extraktionsschritte und der Fest-Flüssig-Trennung genutzt wird; wobei der ein und derselbe Doppelschneckenextruder Folgendes aufweist:
- einen vorgelagerten Bereich, worin die Ausgangszusammensetzung im Wesentlichen und gleichzeitig einer thermischen Behandlung und einer mechanischen Behandlung, der gemischten Behandlung, unterzogen wird, und
- einen nachgelagerten Bereich, worin das aus der gemischten Behandlung erhaltene und aus der vorgelagerten Zone herauskommende Zwischenprodukt mit einer alkalischen Lösung in Kontakt gebracht wird; wobei der nachgelagerte Bereich ebenfalls eine Flüssigkeitsauslassöffnung umfasst, die mit einem Filter vorgesehen ist, der es erlaubt, die Fest-Flüssig-Trennung durch Filtration durchzuführen.

17. Verfahren nach einem der Ansprüche 8 bis 16, **dadurch gekennzeichnet, dass** eine die künstlichen Humussubstanzen enthaltende flüssige Phase gewonnen wird und der pH-Wert dieser flüssigen Phase gesenkt wird.

18. Verfahren nach Anspruch 17, **dadurch gekennzeichnet, dass** der flüssigen Phase eine Salpetersäurelösung hinzugefügt wird.

19. Verfahren nach einem der Ansprüche 17 oder 18, **dadurch gekennzeichnet, dass** der flüssigen Phase eine Salpetersäurelösung in einer Konzentration und Menge hinzugefügt wird, die zum Erhalten einer flüssigen Lösung eines mit einer Nutzung als Düngemittel zum Düngen von Kulturböden kompatiblen pH-Werts angepasst sind.

20. Verfahren nach einem der Ansprüche 17 bis 19, **dadurch gekennzeichnet, dass** der flüssigen Phase mindestens eine Salpetersäurelösung einer Normalität 1N hinzugefügt wird.

## Claims

1. Method for preparation of an artificial humic composition in which:
• an initial composition is chosen containing mainly at least one fresh lignocellulose material,
• a treatment called a mixed, thermal and mechanical treatment is applied to the initial composition in the solid, divided and previously dried state, to form an intermediate product containing artificial humic substances, among which:
- the initial composition is added into a chamber (3) at a temperature of between 100°C and 280°C,
- a mechanical treatment is carried out on the dry initial composition in this chamber (3), including at least one maintained displacement of at least one rigid mechanical device (2a, 2b) inside and in contact with the initial composition,
• said artificial humic substances are extracted from the intermediate product obtained from said mixed treatment.

2. Method according to claim 1, **characterised in that** said fresh lignocellose material is chosen from among wood, corn stalks and cobs and cereal straw.

3. Method according to claim 1 or 2, **characterised in that** an initial composition containing fresh lignocellulose material with a moisture content of less than 20% is chosen.

4. Method according to one of claims 1 to 3, **characterised in that** said initial composition comprises poplar wood in the form of divided particles with a thickness of at least less than 1.5 cm.

5. Method according to claim 4, **characterised in that** the poplar wood particles are chosen from among chips and sawdust.

6. Method according to claim 4 or 5, **characterised in that** said mixed treatment is done at a temperature between 170°C and 230°C.

7. Method according to one of claims 1 to 6, **characterised in that** said mixed treatment is done with a twin-screw extruder (1); said twin screw extruder (1) comprises a heated chamber (3) that can bring said lignocellulose material to said treatment temperature; the rotation speed of the twin-screw (2a, 2b) and its screw profile are chosen to achieve a mixing and grinding effect, and a residence time of said lignocellulose material in said twin-screw extruder (1) adapted to lead to the formation of said intermediate product containing artificial humic substances.

8. Method according to one of claims 1 to 7, **characterised in that** humic substances are extracted from the intermediate product by entrainment in an alkali solution; said alkali solution is mixed with said intermediate product and a liquid phase is recovered containing said artificial humic substances.

9. Method according to claim 8, **characterised in that** said humic substances are extracted with a solution of potassium hydroxide (KOH) at a temperature of between 40°C and 150°C.

10. Method according to claim 9, **characterised in that** a solution of potassium hydroxide (KOH) with normality 1N is used.

11. Method according to claim 10, **characterised in that** said artificial humic substances are extracted at a temperature of the order of 120°C.

12. Method according to one of claims 8 to 11, **characterised in that** said humic substances are extracted by macerating while stirring the intermediate product with the alkali solution, and then a solid-liquid separation of the solid and liquid phases is made.

13. Method according to claim 12, **characterised in that** the solid-liquid separation is made by filtering.

14. Method according to claim 12 or 13, **characterised in that** the steps to extract artificial humic substances and to make the solid-liquid separation are made with a twin-screw extruder (7) comprising a chamber (10) in which the intermediate product can be contained, and a solid-liquid filter (13) installed at a downstream end of this chamber (10).

15. Method according to claim 14, **characterised in that** the rotation speed of the twin-screw (9a, 9b) of said twin-screw extruder (7) and its screw profile are chosen to achieve a mixing effect and a maceration time of the intermediate product with the alkali solution such that the intermediate product can be extracted from said artificial humic substances.

16. Method according to claims 8 to 15, **characterised in that** a single twin-screw extruder is used for the mixed treatment and the extraction and solid-liquid separation steps; said single twin-screw extruder comprises:
- an upstream zone in which essentially a heat treatment and a mechanical treatment, called mixed treatment, are applied concomitantly to the initial composition, and
- a downstream zone in which the intermediate product obtained from said mixed treatment and output from said upstream zone is put into contact with an alkali solution; said downstream zone also comprises a liquid evacuation orifice provided with a solid-liquid filter that enables solid-liquid separation by filtering.

17. Method according to one of claims 8 to 16, **characterised in that** a liquid phase is recovered containing the artificial humic substances and the pH of this liquid phase is lowered.

18. Method according to claim 17, **characterised in that** a nitric acid solution is added to said liquid phase.

19. Method according to claim 17 or 18, **characterised in that** a nitric acid solution with a concentration and quantity adapted to obtain a solution with a pH compatible with use as fertiliser to fertilise arable land is added to said liquid phase.

20. Method according to one of claims 17 to 19, **characterised in that** at least one solution of nitric acid with normality 1N is added to said liquid.
